# EUROPEAN PATENT SPECIFICATION

(11) **EP 2 513 222 B1**
(45) Date of publication and mention of the grant of the patent: **28.03.2018**
(21) Application number: 10801302.0
(22) Date of filing: 15.12.2010
(51) Int. Cl.: C08L 33/00, C08L 77/00, A22C 13/00

(54) **NON-POROUS MOISTURE AND GAS PERMEABLE FILMS**
NICHTPORÖSE FEUCHTIGKEITS- UND GASDURCHLÄSSIGE FOLIEN
PELLICULES D'HYDRATATION NON POREUSES ET PERMÉABLES AUX GAZ

(30) Priority: 16.12.2009 US 286903 P
(43) Date of publication of application: 24.10.2012
(73) Proprietor: E. I. du Pont de Nemours and Company, Wilmington, DE 19898 (US)
(72) Inventor: CHEN, John, Chu, Hockessin, Delaware 19707 (US)
(74) Representative: Heinemann, Monica
(86) International application number: PCT/US2010/060407
(87) International publication number: WO 2011/084448

(56) References cited:
- EP-A1- 0 722 664
- WO-A2-2004/043155

## Description

The present invention relates to moisture and gas permeable non-porous polymeric films.

### Background of the Invention

Synthetic films having a high permeability to gases such as oxygen, and moisture can be useful in many applications.

One application where it can be desirable to have film with high water and gas permeability is as a casing for foodstuffs, or in food packaging. Foodstuff casings have been made either of natural material such as cellulose or animal guts, or more recently of synthetic material. Usually, the foodstuff is packed into the casing. When smoked products are desired, the encased foodstuff can be further subjected to a smoking process. In a conventional smoking process, the product is suspended in a chamber wherein it is exposed to hot smoke from burning wood. This process has previously had the disadvantage that only natural casings could be used, for example, those obtained from guts or cellulose or collagen casings which all show a natural permeability to smoke.

Casings made from natural products and/or cellulose can present many disadvantages: they can be expensive; their great permeability to steam can cause significant weight loss from a foodstuff; and the product can be unstable due to drying and/or superficial fat oxidation. Also, graying caused by microbial spoiling of the natural casing often appears on casings. The manufacturing process for fibrous and cellulose casings involves emissions of carbon disulfide and hydrogen sulfide to the atmosphere, which can be an environmental concern, or require expensive gas scrubbing systems to minimize emissions.

There have been different approaches that attempt to overcome these problems. Single and multilayer plastic casings for packaging sausages are known in the art, for example. These previous attempts at preparing casings from synthetic materials have had limited success. Films prepared from a number of different plastic compositions are suitable for preparing cooked sausages, but they are insufficiently permeable to smoke. For example, monolayer films comprising polyamides (nylons) have the mechanical properties required for this application but are not sufficiently permeable to humidity and smoke.

Polyamides have also been blended with other polymeric materials in attempts to make blended compositions suitable for sausage casings. *See, e.g*., US5773059, EP797918, EP476963, and WO 98/19551.

Recently, developments have been described in US2004/0047951 to make polyamide-based casings more smokeable by blending in absorptive polymers such as block copolyetheramides. However, preparing casings from the blends in a double-bubble process has proven to be difficult.

A point in the preparation and storage of smoked products is that the casings desirably show different permeabilities depending on the step of the process. A high permeability is needed at high temperatures (typically between 50 and 100°C) and high humidity, during the smoking process. Once the product is smoked and cooled, it is preferable that the casing acts as a barrier against humidity so the permeability preferably be low at temperatures less than 50°C, particularly less than 30°C.

Unmodified ethylene acid copolymers have not been known for high water/gas permeability. However, ethylene acid copolymers and/or their ionomers have other properties that would make them desirable in applications where water/gas permeability is an important factor.

Moisture and gas permeable ionomeric films have been described in US7045566. The films are obtained from blends of ionomers with an organic acid salt in the amount of at least about 5 weight %, and have MVTR greater than films obtained from conventional ionomers. The films were described as suitable for preparation of tubular casings and shrinkbags, in particular, casings for smoked foodstuffs.

It is desirable to have a synthetic casing that can be used effectively and efficiently for storage and for a smoking process. It is also desirable that the casing be easy to prepare using conventional film forming processes such as double-bubble processing.

### Summary of the Invention

A composition comprises a blend of a polyamide (nylon), an organic acid modified ionomer, and optionally a compatibilizer including a dicarboxylate-containing copolymer, an ethylene acid copolymer, and an ethylene epoxide-containing copolymer, or combinations of two or more thereof. The dicarboxylate-containing polymer may include ethylene/maleic anhydride copolymers or ethylene/maleic acid monoester copolymers. The epoxide-containing copolymers may include ethylene/butyl acrylate/glycidyl methacrylate or ethylene acid copolymers. A film produced from the composition may have the permeability and mechanical properties required for producing smokeable food packaging such as sausage casings.

The organic acid modified ionomer composition comprises, consists essentially of, or consists of, a blend of (a) one or more ethylene acid copolymers or E/W copolymers wherein E represents copolymerized units of ethylene, W represents copolymerized units of at least one C₃-C₈ α,β-ethylenically unsaturated carboxylic acid, and W can be from about 3 to 35 weight % of the E/W copolymer and ethylene can make up the rest, or ionomer of the acid ethylene acid copolymer; and (b) one or more organic acids, or salt thereof, wherein the organic acid has from 4 to 36 carbon atoms, optionally substituted on the longest carbon chain with one to three substituents independently selected from the group consisting of C₁-C₈ alkyl group, OH group, and OR¹ group; wherein each R¹ is independently C₁-C₈ alkyl group, C₁-C₆ alkoxyalkyl group, or COR² group; each R² is independently C₁-C₈ alkyl group; and the organic acid or salt thereof is present in the composition from about 5 to about 50 weight % of the combination of (a) and (b); wherein at least 50 % of the combined acidic groups in the E/W copolymer and the organic acid are nominally neutralized to the corresponding salts containing metal ions wherein at least 50 % of the metal ions are alkali metal ions.

The invention also includes a film, including a multilayer film, wherein the film has a moisture vapor transmission rate (MVTR) of at least about 300 g/m²-D, measured according to ASTM D6701-01, at 37.8°C at 100% relative humidity, comprising the composition described above; or packages for containing and processing a foodstuff, such as sausage casings, comprising the composition described above or a film comprising the composition described above. Suitable films may be from about 0.25 to about 5 mils in thickness, preferably from 0.5 to 3 mils.

Also included is a method to prepare tubular films using a double bubble blown film process wherein the film comprises the composition described above.

The invention also provides a method for preparing a foodstuff comprising preparing a package comprising the composition described above, a shirring process during placing a foodstuff inside the package, and treating the packaged foodstuff with smoke and heat.

### Detailed Description of the Invention

Several patents and publications are cited in this description in order to more fully describe the state of the art to which this invention pertains. The entire disclosure of each of these patents and publications is incorporated by reference herein. Trademarks and tradenames are in uppercase.

"Copolymer" means a polymer containing two or more different monomers. The terms "dipolymer" and "terpolymer" mean polymers containing only two and three different monomers respectively. The phrase "copolymer of various monomers" means a copolymer whose units are derived from the various monomers.

Smoking of foodstuffs provides the following effects: flavoring, coloring, preserving by antioxidative and antimicrobial action and formation of a secondary skin. (A general reference on the chemical aspects of the smoking of meat and meat products may be found in "Advances in Food Research, vol. 29". Academic Press, Inc, Orlando, Fla. 1984. 87-150.) Curing smoke consists of a dispersed phase of solid and liquid particles as well as a gaseous phase. The size of liquid particles varies between 0.2-0.4 [µm.

Both smoke flavor and color are formed by the combined effects of many agents/substances and by their reactions with the product itself. Smoke flavor and color do not necessarily form by influence of the same factors, and certain factors may be synergistic properties.

Smokeability refers to the smoke-permeability properties of the casing. It has been observed that the smokeability of a casing is directly proportional to the moisture vapour transmission rate (MVTR) of the casing.

Polyamides melt-blended with organic acid modified ionomers and optionally compatibilizers selected from the group consisting of dicarboxylate-containing polymers, ethylene/acid/ester terpolymers and ethylene/glycidyl ester copolymers provide smoke-permeable compositions and films made therefrom that are suitable for preparing smoked sausages.

The selectively permeable composition includes polyamides. Any polyamides (abbreviated PA), also referred to as nylons and the terms used interchangeably herein, produced from lactams or amino acids, known to one skilled in the art, may be used in the composition. Polyamides suitable for use herein include aliphatic polyamides, amorphous polyamides, or a mixture thereof. "Aliphatic polyamides" as the term is used herein can refer to aliphatic polyamides, aliphatic copolyamides, and blends or mixtures of these.

Polyamides from single reactants such as lactams or amino acids, referred to as AB type polyamides are disclosed in Nylon Plastics (edited by Melvin L. Kohan, 1973, John Wiley and Sons, Inc.) and include nylon-6, nylon-11, nylon-12, or combinations of two or more thereof. Polyamides prepared from more than one lactam or amino acid include nylon-6,12. Frequently used polyamides include nylon-6, nylon-11, nylon-12, and nylon-6,12 or combinations of two or more thereof.

Other well known polyamides useful in the composition include those prepared from condensation of diamines and diacids, referred to as AABB type polyamides (including nylon-66, nylon-610, nylon-612, nylon-1010, and nylon-1212) as well as from a combination of diamines and diacids such as nylon-66/610, or combinations of two or more thereof.

Polyamides 6/66 are commercially available under the tradenames "Ultramid C4" and "Ultramid C35" from BASF, or under the tradename "Ube5033FXD27" from Ube Industries Ltd. Polyamide 6 is commercially available under the tradename Nylon 4.12 from E.I. du Pont de Nemours, for example.

In a preferred embodiment, the aliphatic polyamide has a viscosity ranging from about 140 to about 270 cubic centimeters per gram (cm³/g) measured according to ISO307 at 0.5 % in 96 % H₂SO₄.

The film may further comprise other polyamides such as those described in U.S. Patents 5,408,000; 4,174,358; 3,393,210; 2,512,606; 2,312,966 and 2,241,322. The film may also comprise partially aromatic polyamides. Non-aliphatic amorphous polyamides including poly(m-xylene adipamide) (such as nylon MXD6 from Mitsubishi Gas Chemical America Inc.) or amorphous polyamide produced from hexamethylene diamine and isophthalic/terephthalic acids (the amorphous nylon resin 6-I/6-T commercially available under the tradename Selar® PA from E.I. du Pont de Nemours and Company or commercially available under the tradename Grivory® G 21 from EMS-Chemie AG) may be used.

Because polyamides and processes for making them are well known to one skilled in the art, disclosure of their preparation is omitted herein for the interest of brevity.

Preferred polyamides are selected from the group comprising:
PA-6 = H-(NH-(CH₂)₅-CO)ₙ-OH (nylon-6) homopolymer or copolymer,
PA-66 = H-(NH-(CH₂)₆-HN-CO-(CH₂)₄-CO)ₙ-OH (nylon 66),
PA-612 = H-(NH-(CH₂)₆-HN-CO-(CH₂)₁₀-CO)ₙ-OH (nylon 612),
PA-6/66 = H-(NH-(CH₂)₅-CO)-OH + H-(NH-(CH₂)₆-HN-CO-(CH₂)₄-CO)-OH (in random order) (nylon 6/66),
PA-6/12 = H-NH-(CH₂)₅-CO)-OH + H-(NH-(CH₂)₁₁-CO) -OH (in random order) (nylon 6/12),
PA-6/69 = H-(NH-(CH₂)₅-CO)-OH + H- (NH-(CH₂)₆-HN-CO-(CH₂)₇-CO)-OH (in random order) (nylon 6/69), and
MXDA containing polyamides, partially aromatic polyamides and mixtures of above mentioned polyamides.

More preferred polyamides include PA-6, PA-6/66, PA-66, or mixtures of PA-6/66 and PA-6.

The polyamide may be present in the selectively permeable composition in an amount from 45 to 85 weight %, based on the total weight of all polymeric components of the blend.

As described below, layers comprising or consisting essentially of the above-described polyamides (without added organic acid modified ionomer) can be included in multilayer structures comprising a layer of the polyamide-organic acid modified ionomer blend composition.

The selectively permeable composition also includes an organic acid modified ionomer composition comprising, consisting essentially of, or produced from one or more ethylene acid copolymers or E/W copolymers or ionomers of the acid copolymers wherein E represents copolymerized units of ethylene, W represents copolymerized units of at least one C₃-C₈ α,β-ethylenically unsaturated carboxylic acid, and W can be from about 3 to 35, 4 to 25, or 5 to 20, weight % of the E/W copolymer and ethylene can make up the rest.

W includes unsaturated acids such as acrylic acid, methacrylic acid, maleic acid, itaconic acid, fumaric acid, MAME, or combinations of two or more thereof.

Specific E/W acid copolymers include ethylene/acrylic acid dipolymers and ethylene/methacrylic acid dipolymers. Other E/W acid copolymers include ethylene/maleic acid dipolymers or MAME.

The acid copolymers used to make the compositions are preferably "random" acid copolymers, polymerized by adding all monomers simultaneously, so that atoms from the comonomer(s) form part of the polymer backbone. They are distinct from a graft copolymer, where an additional monomer is grafted onto an existing polymer, often by a subsequent free radical reaction.

The ethylene acid copolymers may be produced by any methods known to one skilled in the art such as described in US Patent 4,351,931, or by use of "co-solvent technology" disclosed in US Patent 5,028,674.

An ionomer can be derived from the ethylene acid copolymer described above by neutralization of at least a portion of the acid moieties in the ethylene acid copolymer. Neutralizing agents, including basic compounds with metal cations such as sodium or potassium ions, are used to neutralize at least some portion of the acidic groups in the acid copolymer. Unmodified ionomers are prepared from the acid copolymers such as those disclosed in US Patents 3,264,272 and 3,344,014. "Unmodified" refers to ionomers that are not blended with any material that has an effect on the properties of the unblended ionomer. The acid copolymer may be used to prepare unmodified, melt processable ionomers by treatment with a metal compound. The unmodified ionomers may be nominally neutralized to any level such as about 15 to about 90% or about 40 to about 75% of the acid moieties. More preferred are ionomers comprising sodium and/or potassium cations. Most preferred are potassium-containing ionomers.

Useful ionomers include ionomers obtained from E/acrylic acid or E/methacrylic acid dipolymers having a weight average molecular weight (M_{w}) of from about 80,000 to about 500,000.

The acid copolymers or unmodified ionomers described above may be mixed with organic acids or salts thereof as described below, and/or basic compounds by any means known to one skilled in the art, to prepare organic acid modified ionomer compositions.

The organic acids and/or salts thereof (hereinafter referred to collectively as "acids", unless specific reference to an acid or a salt is made) are added in an amount sufficient to disrupt the crystallinity of the ionomer and/or enhance the permeability of the composition. Preferably, the acids are added in an amount of from at least about 5 weight % to about 50 weight % of the total weight of ethylene acid copolymer and acids of the organic acid modified ionomer blend. More preferably, the acids are added in an amount of from about 10 weight % to about 30 weight % of the organic acid modified ionomer blend.

The organic acids may be monobasic, having fewer than 36 carbon atoms, or salts thereof and may be present in the ionomer or composition from about 1 to about 50 weight %. The acids are optionally substituted on the longest carbon chain with from one to three substituents independently selected from the group consisting of C₁-C₈ alkyl, OH, and OR¹ in which each R¹ is independently C₁-C₈ alkyl, C₁-C₆ alkoxyalkyl or COR²; and each R² is C₁-C₈ alkyl, provided that the substituted acid meets any carbon count limitations described herein.

Organic acids may be commercially available as a mixture of a named organic acid and a number of structurally different organic acids of varying lesser amounts. When a composition comprises a named acid, other unnamed acids may be present at levels conventionally known to be present in commercial supplies of the named acid.

Examples of organic acids include C₄ to C₃₆ (such as C₃₄, C₄₋₂₆, C₆₋₂₂, or C₁₂₋₂₂) acids. At 100% nominal neutralization (i.e., sufficient metal compound is added such that all acid moieties in the copolymer and organic acid are nominally neutralized), volatility is not an issue and organic acids with lower carbon content may be used, though it is preferred that the organic acid (or salt) be non-volatile (not volatilize at temperatures of melt blending of the agent with the acid copolymer) and non-migratory (not bloom to the surface of the polymer under normal storage conditions (ambient temperatures)). Examples of organic acids include, but are not limited to, caproic acid, caprylic acid, capric acid, lauric acid, stearic acid, isostearic acid, arachidic acid, behenic acid, erucic acid, oleic acid, and linoleic acid. Preferred organic (fatty) acids include palmitic acid, stearic acid, oleic acid, erucic acid, arachidic acid, behenic acid, isostearic acid, 12-hydroxystearic acid, or combinations of two or more thereof. Saturated organic acids, such as stearic acid and behenic acid, may be preferred.

Particularly preferred are the salts of non-crystalline acids (at ambient temperatures) having branched alkyl substituents or unsaturation, such as isostearic acid salts and isooleic acid salts, for example. Non-crystalline branched acids give surprisingly good permeability properties.

Salts of any of these organic acids may include any alkali metal, such as for example, ions obtained from lithium, sodium, and the like. (Alkaline earth and transition metals alone are not providing moisture permeability.) Preferably the organic acid salt comprises alkali metal ions, such that the metal ions present in the final composition comprise at least 50% of alkali metal ions, including sodium, potassium salts and/or cesium salts. Most preferred are the potassium salts of organic acids.

The organic acids can be added in either the acid form or the salt form. If added as the acid, then a neutralization step may be carried out on the blended ethylene acid copolymer composition to provide the desired level of neutralization. Likewise, the organic acid salt can be added to an ethylene acid copolymer or a copolymer ionomer. It may be preferred to add the organic acid already in the salt form to the ionomer. Complete neutralization of the organic acid may be preferred.

The amount of basic metal compound capable of neutralizing acidic groups may be provided by adding the stoichiometric amount of the basic compound calculated to neutralize a target amount of acid moieties in the acid copolymer and organic acid(s) in the blend (hereinafter referred to as "% nominal neutralization" or "nominally neutralized"). Thus, sufficient basic compound is made available in the blend so that, in aggregate, the indicated level of nominal neutralization could be achieved. Greater than 50%, 60%, 70%, 80% or 90% (or even 100%) of the total acidic groups in the E/W copolymers and organic acids may be nominally neutralized to form salts with metal ions; and the metal ions comprise at least 50 mole % alkali metal ions (preferably at least 60, 70, 80, 90, or 100%). Small amounts of salts of alkaline earth metal and/or transition metal ions may be present in addition to the alkali metals.

Basic metal compounds may include compounds of alkali metals, such as lithium, sodium, potassium, or cesium or combinations of such cations. Examples include sodium, potassium, cesium or any combination of sodium, potassium, and/or cesium, optionally including small amounts of other cations such as other alkali metal ions, transition metal ions or alkaline earth ions. Metal compounds of note include formates, acetates, nitrates, carbonates, hydrogencarbonates, oxides, hydroxides or alkoxides of the ions of alkali metals, especially sodium and potassium, and formates, acetates, nitrates, oxides, hydroxides or alkoxides of the ions of alkaline earth metals and transition metals. Of note are sodium hydroxide, potassium hydroxide, sodium acetate, potassium acetate, sodium carbonate and potassium carbonate.

A melt-processible, organic acid modified ionomer blend can be produced by heating a mixture of the E/W copolymer or ionomer, the organic acid or salt thereof, and the basic compound necessary to achieve the desired neutralization level. For example, the components of the composition can be mixed by melt-blending the individual components; and concurrently or subsequently adding a sufficient amount of a basic compound capable of neutralization of the acid moieties (including those in the acid copolymer and in the organic acid), preferably to nominal neutralization levels greater than 70, 80, 90 %, to near 100 %, or to 100 % or above.

For example, a twin-screw extruder may be used to mix and treat the acid copolymer and the organic acid (or salt) with the metal compound at the same time. It is desirable that the mixing is conducted so that the components are intimately mixed, allowing the basic metal compound to neutralize the acidic moieties.

Treatment of acid copolymers and organic acids with basic compounds in this manner (concurrently or subsequently), without the use of an inert diluent, to prepare the composition can avoid loss of processibility or properties such as toughness and elongation to a level higher than that which would result in loss of melt processibility and properties for the ionomer alone. For example, an acid copolymer blended with organic acid(s) can be nominally neutralized to over 70%, 80 %, 90 %, or to about 100 % or to 100 % without losing melt processibility. In addition, nominal neutralization to about 100 % or to 100 % reduces the volatility of the organic acids.

Also as described below, layers comprising or consisting essentially of the above-described organic acid modified ionomer (without added polyamides) can be included in multilayer structures comprising a layer of the polyamide-organic acid modified ionomer blend composition.

The compatibilizer can be selected from the group consisting of a dicarboxylate-containing polymer, an ethylene acid copolymer or E/X/Y copolymer, an ethylene epoxide-containing (glycidyl) copolymer, and a softened ethylene acid copolymer and may be used in the selectively permeable composition. Preferably only a single type of compatibilizer is used.

The compatibilizer may improve compatibility of the organic acid modified ionomer and the polyamide, providing improved blending processibility and more consistent interphase dispersion.

A dicarboxylate-containing polymer may be used as an optional compatibilizer polymer. As used herein, the term "dicarboxylate-containing polymer" refers to a polymer comprising copolymerized units of ethylene or propylene and a polar comonomer selected from the group consisting of cyclic anhydrides of C₄-C₈ unsaturated diacids, monoesters of C₄-C₈ unsaturated acids having at least two carboxylic acid groups (e.g. those diacids wherein one carboxyl group is esterified and the other is a carboxylic acid group), diesters of C₄-C₈ unsaturated acids having at least two carboxylic acid groups, and mixtures thereof.

Preferably the cyclic anhydrides and the monoesters and diesters of the diacids are those wherein the dicarboxyl groups are vicinal (i.e. the carboxyl groups are substituted on consecutive carbon atoms). Cyclic anhydrides include maleic anhydride, citraconic anhydride, itaconic anhydride, tetrahydrophthalic anhydride, or combinations of two or more thereof. Examples of monoesters include maleic acid monoesters, fumaric acid monoesters and citraconic acid monoesters. Maleic acid monoesters are also known as maleic half-esters or alkyl hydrogen maleates. Examples of diesters include maleic acid diesters, fumaric acid diesters and citraconic acid diesters. The esters are preferably esters wherein the alkyl groups contain 1 to 4 carbon atoms.

Copolymers of ethylene and maleic anhydride are preferred. Copolymers of ethylene and maleic acid monoesters, more preferably maleic acid C₁-C₄ alkyl monoesters such as, for example, methyl, ethyl, n-propyl, isopropyl, and n-butyl monoesters are also preferred, and copolymers of ethylene and maleic acid monoethyl ester (i.e. ethyl hydrogen maleate) are also preferred.

The dicarboxylate-containing copolymer may be obtained by known techniques, such as a grafting process in which a polymer selected from a polyethlene homopolymer or copolymer, a polypropylene homopolymer or copolymer, an ethylene/vinyl acetate copolymer or an ethylene/alkyl (meth)acrylate copolymer is dissolved in an organic solvent with an unsaturated dicarboxylic acid anhydride, unsaturated dicarboxylic acid monoester or unsaturated dicarboxylic acid diester and a radical generator, followed by heating with stirring. Grafting processes provide copolymers with from about 0.1 to about 3 weight % of anhydride units. Graft copolymers provide copolymers wherein no carbons from the unsaturated dicarboxylate group or are incorporated into the polymer backbone and the dicarboxylate groups are pendant from the polymer backbone. These graft copolymers are available commercially from DuPont under the FUSABOND® or BYNEL® brand names.

Ethylene copolymers that include reactive functional groups such as maleic anhydride or maleic acid monoethyl ester also may be readily obtained by a high-pressure free radical process, in which an olefin comonomer and a functional comonomer are randomly copolymerized. The morphology of the random copolymer is such that the polymeric chains consist of random copolymerized units of ethylene and about 5 to about 15 % by weight of functional comonomer units. Random copolymers are a distinct class and differ from grafted polymers. In these copolymers carbon atoms (those that were originally unsaturated) from the anhydride comonomer or dicarboxylate monoester or diester comonomer are incorporated into the polymer backbone.

A suitable high-pressure process is described, for example, in US Patent 4,351,931. This process allows for preparation of copolymers with greater than 3 weight %, for example, about 4 or 5 weight % to about 15 weight %, of anhydride units. These copolymers include olefin/maleate copolymers such as ethylene/maleic anhydride and ethylene/maleic acid monoethyl ester copolymers.

A softened ethylene acid copolymer comprising copolymerized units of ethylene, copolymerized units of at least one C₃ to C₈ α,β-ethylenically unsaturated carboxylic acid, and copolymerized units of vinyl acetate, alkyl acrylate or alkyl methacrylate may be used as an optional compatibilizer polymer.

These copolymers may be referred to as E/X/Y copolymers wherein E represents copolymerized units of ethylene, X is present in about 2 to about 35 weight % of the copolymer and represents copolymerized units of at least one C₃ to Cg α,β-ethylenically unsaturated carboxylic acid, and Y is present in 0.1 to about 35 weight %, or about 2 to about 35 weight % of the copolymer, and represents copolymerized units of a softening comonomer.

By "softening" is meant that the polymer is less crystalline than a polymer having the same amount of copolymerized units of at least one C₃ to C₈ α,β-ethylenically unsaturated carboxylic acid and no copolymerized units of a softening comonomer.

Examples of X include unsaturated acids such as acrylic acid, methacrylic acid, maleic acid, fumaric acid, and itaconic acid. Preferred X include acrylic acid and methacrylic acid.

Examples of softening comonomers (Y) include vinyl acetate, alkyl acrylate, alkyl methacrylate, or combinations thereof wherein the alkyl groups have from 1 to 8, or 1 to 4, carbon atoms. Suitable softening comonomers are, for example, methyl (meth)acrylate; ethyl (meth)acrylate; isopropyl (meth)acrylate; and n-butyl (meth)acrylate.

Examples of the E/X/Y copolymers include ethylene/acrylic acid/n-butyl acrylate, ethylene/methacrylic acid/n-butyl methacrylate, ethylene/acrylic acid/iso-butyl acrylate, ethylene/methacrylic acid/iso-butyl methacrylate, ethylene/acrylic acid/methyl acrylate, ethylene/methacrylic acid/methyl methacrylate, ethylene/acrylic acid/ethyl acrylate terpolymers, and ethylene/methacrylic acid/ethyl methacrylate terpolymers, or combinations of two or more thereof.

The ethylene glycidyl ester copolymer may comprise, based on the total weight of the ethylene glycidyl ester copolymer, about 20 to about 95% of copolymerized units of ethylene, about 0.5 to about 25% of copolymerized units of one or more olefins of the formula CH₂₌C(R⁵)CO₂R⁶, and 0 to about 70% of copolymerized units of one or more olefins of the formula CH₂=C(R³)CO₂R⁴; R³ is hydrogen or an alkyl group with 1 to 8 carbon atoms; R⁴ is an alkyl group with 1 to 8 carbon atoms, such as methyl, ethyl, or butyl, or combinations thereof; R⁵ is hydrogen or an alkyl group with 1 to 6 carbon atoms; and R⁶ is glycidyl, based on the total weight of the ethylene ester copolymer. The ethylene glycidyl ester copolymer can be made by copolymerizing units (monomers) of (a) ethylene; (b) one or more olefins of the formula CH₂=C(R⁵)CO₂R⁶, and optionally (c) one or more olefins of the formula CH₂=C(R³)CO₂R⁴. An example of the ethylene copolymer consists essentially of copolymerized units of ethylene and copolymerized units of glycidyl methacrylate and is referred to as EGMA. Optional monomers (iii) may be butyl acrylates. One or more of n-butyl acrylate, tert-butyl acrylate, *iso*-butyl acrylate, and sec-butyl acrylate may be used. An ethylene glycidyl ester copolymer example consists essentially of copolymerized units of ethylene, copolymerized units of butyl acrylate, and copolymerized units of glycidyl methacrylate (EBAGMA) as well as of ethylene, copolymerized units of methyl acrylate, and copolymerized units of glycidyl methacrylate (EMAGMA). Copolymerized units derived from monomer (iii), when present, may comprise, based on the copolymer weight, from about 3, 15 or 20% to about 35, 40 or 70%.

The ethylene glycidyl ester copolymers may additionally comprise other comonomers such as carbon monoxide. When present, copolymerized units of carbon monoxide generally may comprise up to about 20 weight%, or about 3 to about 15 weight% of the total weight of the ethylene glycidyl ester copolymer.

The ethylene glycidyl ester copolymers may be prepared by any suitable process such as those disclosed in US 3350372; 3756996; 5532066; 5543233; and 5571878. Alternatively the ethylene glycidyl ester copolymer may be a glycidyl methacrylate grafted ethylene copolymer or polyolefin, wherein an existing ethylene copolymer such as ethylene/methyl acrylate copolymer or a polyolefin such as polyethylene is reacted with glycidyl methacrylate to provide a copolymer with units derived from glycidyl methacrylate pendant from the polymer chain.

Preferably, the blend comprises 25 to 85 weight % of polyamide, based on the total weight of (1), (2), (3), (4) and (5); 25 to 85 weight % of the organic acid modified ionomer composition of (2), based on the total weight of (1), (2), (3), (4) and (5); 0 to 15 weight % of dicarboxylate-containing polymer, based on the total weight of (1), (2), (3), (4) and (5); 0 to 20 weight % of ethylene acid terpolymer, based on the total weight of (1), (2), (3), (4) and (5); and 0 to 15 weight % of ethylene glycidyl ester copolymer, based on the total weight of (1), (2), (3), (4) and (5).

When present in the composition, the optional dicarboxylate-containing copolymer or ethylene glycidyl ester copolymer is present in from 0.1 to 15 weight %, preferably from 1 to 15 weight %, more preferably from 2 to 10 weight %, 2 to 5 weight%, based on the total weight of polymeric materials present. When present in the composition, the optional softened ethylene acid copolymer is present in from 0.1 to 20 weight %, preferably from 3 to 20 weight %, more preferably from 5 to 15 weight %, based on the total weight of polymeric materials present.

The selectively permeable blend may be "polyamide-rich" in which the polyamide comprises from 45 to 85 weight % of the blend and the organic acid modified ionomer comprises from 25 to 45 weight % of the blend, with or without compatibilizer. Alternatively, the selectively permeable blend may be "organic acid modified ionomer-rich" in which the organic acid modified ionomer comprises from 45 to 85 weight % of the blend and the polyamide comprises 25 to 45 weight % of the blend, with or without compatibilizer.

When a combination of dicarboxylate-containing copolymer, softened ethylene acid copolymer and/or ethylene glycidyl ester copolymer is used in the composition, the total amount of compatiblizer does not exceed 20 weight %. For example, the selectively permeable composition may comprise 1 to 10 weight % of dicarboxylate-containing copolymer and 1 to 10 weight % of softened ethylene acid copolymer, or 1 to 10 weight % of dicarboxylate-containing copolymer and 1 to 10 weight % of ethylene glycidyl ester copolymer, 1 to 10 weight % of ethylene glycidyl ester copolymer copolymer and 1 to 10 weight % of softened ethylene acid copolymer.

The selectively permeable composition disclosed above may be produced by any means known to one skilled in the art. It is substantially melt-processable and may be produced by combining one or more ethylene acid copolymers, one or more monobasic carboxylic acids or salts thereof, basic compound(s), polyamides and, optionally, compatibilizers (i.e. dicarboxylate-containing copolymer, ethylene glycidyl copolymer or softened ethylene acid copolymer) to form a mixture; and heating the mixture under a condition sufficient to produce the composition. Heating may be carried out under a temperature in the range of from about 140 to about 350, about 160 to about 335, or 180 to 320°C under a pressure that accommodates the temperature for a period from about 30 seconds to about 2 or 3 hours. For example, the composition may be produced by melt-blending an acid copolymer and/or ionomer thereof with one or more organic acids or salts thereof; concurrently or subsequently combining a sufficient amount of a basic metal compound capable of neutralization of the acid moieties to nominal neutralization levels greater than 50, 60, 70, 80, 90%, to near 100%, or to 100%; and combining with a polyamide and optionally a compatibilizer described above. A salt-and-pepper blend of components may be made or the components may be melt-blended in an extruder.

In some cases, it may be possible to neutralize the ethylene acid copolymer and organic acid with a basic compound in the presence of the other polymeric materials such as the polyamide component. However, it is desirable to prepare the organic acid modified ionomer blend and then subsequently blend in the polyamide and compatibilizer.

The composition can additionally comprise optional nonpolymeric materials, such as conventional additives used in polymer films including plasticizers, stabilizers, antioxidants, ultraviolet ray absorbers and stabilizers, hydrolytic stabilizers, anti-static agents, dyes or pigments, fillers, lubricants, processing aids, antiblock agents, release agents, and/or mixtures thereof. These additives are described in the Kirk Othmer Encyclopedia of Chemical Technology*.*

The additives may be incorporated into the composition by any known process such as by dry blending, extruding a mixture of the various constituents, the conventional masterbatch technique, or the like.

The composition may be formed into articles by various means known to those skilled in the art. For example, the composition may be extruded, laminated, or the like to provide an article that is in a desired shape and size; or preferably cast or blown into a sheet or film.

Molten extruded polymers can be converted into a film using any techniques known to one skilled in the art. For example, a film or sheet comprising the selectively permeable composition can be made by blown film extrusion, cast film extrusion and cast sheet extrusion.

A multilayer structure such as a film may be made from a layer comprising the selectively permeable composition and at least one other layer comprising a composition other than that composition. The layers may be coextruded or they may be formed independently and then adhesively attached to one another to form a multilayer structure. For example, additional layers may comprise or be produced from thermoplastic resins, to which the layer made from the composition is adhered, to provide structure layers, to provide protection or improve the appearance of the article.

Multilayer film structures can be made by coextrusion, or extrusion coating or lamination onto a substrate comprising one or more other layers.

A multilayer film may be prepared by coextrusion. For example, granulates of the selectively permeable composition or components thereof and granulates of the components of other layers are melted in extruders to produce molten polymeric resins, which are passed through a die or set of dies to form layers of molten polymers that are processed as a laminar flow. The molten polymers are cooled to form a layered structure.

Preferably, the film is made by blown film extrusion or coextrusion.

Examples include multilayer films comprising a layer of the selectively permeable composition and at least one additional layer comprising a polyamide composition other than the selectively permeable composition, or multilayer films comprising a layer of the selectively permeable composition and at least one additional layer comprising an organic acid modified ionomer composition other than the selectively permeable composition.

More specifically, a multilayer film may comprise a layer of the selectively permeable composition as an inner layer (a layer in which both principle surfaces of the layer contacts another layer of the structure) and at least one surface layer (a layer in which only one principle surface contacts another layer) comprising a polyamide. Other multilayer films include those with at least one inner layer of the selective composition, an inner layer comprising an organic acid modified ionomer composition (i.e. a combination of ethylene acid copolymer and organic acid, the acid moieties of which are at least partially neutralized to salts containing a majority of alkali metal ions such as that described above), and a surface layer comprising a polyamide.

Other multilayer film examples include the structures listed below, wherein "PA" indicates a polyamide without added organic acid modified ionomer, "OAMI" indicates an organic acid modified ionomer without added polyamide, "PA-rich" indicates a polyamide-rich polyamide-organic acid modified ionomer blend as defined above, and "OAMI-rich" indicates an organic acid modified ionomer-rich polyamide-organic acid modified ionomer blend as defined above. In each of the examples, the polyamides used in the various layers may be the same or different, and the organic acid modified ionomer used in the various layers may be the same or different.
PA/OAMI/PA,
PA-rich/OAMI/PA-rich,
PA/OAMI-rich/PA,
PA/OAMI-rich/OAMI/OAMI-rich/PA, and
PA-rich/OAMI-rich/OAMI/OAMI-rich/PA-rich.

Multilayer films preferably may include from 3 to five layers and/or are preferably blown films.

A film as described herein can be further oriented beyond the immediate quenching or casting of the film. The film may be uniaxially oriented, but is preferably biaxially oriented by drawing in two mutually perpendicular directions in the plane of the film to achieve a satisfactory combination of mechanical and physical properties.

Orientation and stretching apparatus to uniaxially or biaxially stretch film are known in the art and may be adapted by those skilled in the art to produce films of the present invention. Examples of such apparatus and processes include, for example, those disclosed in U.S. Patents 3,278,663; 3,337,665; 3,456,044; 4,590,106; 4,760,116; 4,769,421; 4,797,235 and 4,886,634.

In a preferred embodiment, the film is oriented using a double bubble extrusion process, where simultaneous biaxial orientation may be effected by extruding a primary tube which is subsequently quenched, reheated and then expanded by internal gas pressure to induce transverse orientation, and drawn by differential speed nip or conveying rollers at a rate which may induce longitudinal orientation.

The double bubble processing to obtain an oriented blown film can be carried out as described by Pahlke in U.S. Patent No. 3,456,044. More particularly, a primary tube is melt extruded from an annular die. This extruded primary tube is cooled quickly to minimize crystallization. It is then heated to its orientation temperature (for example, by means of a water bath). In the orientation zone of the film fabrication unit a secondary tube is formed by inflation, thereby the film is radially expanded in the transverse direction and pulled or stretched in the machine direction at a temperature such that expansion occurs in both directions, preferably simultaneously; the expansion of the tubing being accompanied by a sharp, sudden reduction of thickness at the draw point. The tubular film is then again flattened through nip rolls. Optionally, the film can be reinflated and passed through an annealing step (thermofixation), during which step it is heated once more to adjust the shrink properties. Films that are not annealed may be useful as heat-shrinkable films. Annealed films may have better dimensional stablility (less shrinkage) when reheated. For preparation of food casings (for example, sausage casings) it may be desirable to maintain the film in a tubular form. For preparing flat films the tubular film can be slit along its length and opened up into flat sheets that can be rolled and/or further processed.

Preferably, the film can be processed on the film fabrication machine at a speed from about 50 meters per minute (m/min) to a speed of about 200 m/min.

The films have an MVTR of at least about 300 g/m²-D. Preferably, the films have an MVTR of at least about about 500, or alternatively least about 750, or alternatively least about 1000, or higher.

Films described herein can be useful for encasing and processing foodstuffs. Typically, the films are made into tubular casings, preferably by using blown film techniques to prepare a tubular form directly, or by forming a flat sheet of the film into a tubular structure and fastening the edges of the sheet in a seam running the length of the tube.

To facilitate the introduction of the foodstuff into the interior of the tubular casing, the casing optionally may be shirred prior to the introduction of the foodstuff. The term "shirred" means that the tubular casing is gathered into a multiplicity of rows parallel to the circumference of the tubing. The foodstuff is introduced into the interior of the optionally shirred tubular casing via the open end and the tube is stretched out to encase the foodstuff. One skilled in the art of packaging foodstuffs can readily introduce the foodstuff into the casing using well-established procedures.

Food packaging structures also may be prepared by a combination of folding, heat sealing, and optionally thermoforming and/or heat shrinking. Such packages may be useful for packaging larger or irregularly shaped food products such as hams or turkey parts that may be smoked.

Those cast films or sheets that are nearly amorphous and/or not previously oriented may be further thermoformed into articles and structures followed by heat treatment. The thermoformed articles can be prepared by any means known to one skilled in the art, for example by heating the amorphous sheet to above the glass transition temperature (Tg) and below the melting point of the polymer compositions, stretching the sheet by vacuum or pressure forming using a mold to provide a stretched article, and cooling the stretched article to provide a finished article. The stretched article may be optionally heat treated to provide greater crystallization, thus providing dimensional stability for the shaped structure upon reheating. It may be desirable to thermoform the sheets into a shape that approximates the shape of the food product to be packaged.

The obtained casings are surprisingly rapidly smokeable and the smoked product has taste and appearance like a sausage manufactured in conventional smokeable casings. The required smoking time is short, thus making said sausage casings particularly suitable for the manufacture of cooked meat sausages, scalded-emulsion meat products, cooked or rapidly fermented sausages containing fat, and smoked meat products such as hams or turkey, on an industrial scale. Very thin casings can be manufactured that still retain good pressure resistance, dimensional stability and good cooking durability. Further, weight loss of sausages manufactured in casings described herein is significantly lower than the one when using natural or cellulose based casings.

Since the films and casings described herein are also heat-sealable, the manufacture of sausages is more simple and economic. They are fat-proof, that is, no fat leaks through the casings, making them particularly suitable for many fat-containing cooked or fermented sausages.

The tubular casing optionally may be further treated by the adsorption of at least one liquid food-processing flavorant and/or colorant into the absorbent casing. The flavorant and/or colorant is subsequently transferred to the foodstuff during such food processing as heating, curing, smoking, or cooking, for example.

Foodstuffs that can be processed using film of this invention include beef, pork, poultry (for example, chicken and turkey), seafood (for example, fish and mollusks) and cheese. Meat products can be whole-muscle, formed into shapes, or ground. In the case of formed or ground meat, the meat can optionally be a mixture of material derived from more than one species. The foodstuff can be processed prior to its introduction into a casing of the present invention and then further processed in the casing.

In another embodiment, films described herein can also be used for packaging foodstuffs where it is desirable to have absorption of moisture from the foodstuff, while retaining moisture within the packaging. The films can be used, for example, to package uncooked meat or cooked meats (e.g. beef, pork, poultry, ham or seafood) wherein moisture from the foodstuff or excess marinades on the foodstuff can pass out of the foodstuff and pool below.

The following examples are merely illustrative, and are not to be construed as limiting to the scope of the invention.

### EXAMPLES

MI (mass rate of flow of a polymer through a specified capillary under controlled conditions of temperature and pressure) was determined according to ASTM 1238 at 190°C using a 2160 g weight, in g/10 minutes.

For samples with high water permeability (> 100 g/m²-24h), the water vapor transmission tests were conducted on a Mocon PERMATRAN-W 101K, following ASTM D6701-01, at 37.8°C at 100% relative humidity. Water vapor transmission rates (WVTR) are reported in g/m²-24h and water vapor permeation values (WVPV) on film samples are reported in g-mil/m²-24h. The compositions had MVPV of at least 300 g-mil/m²-24h.

In order to illustrate the moisture permeance associated with a film layer involving a selectively permeable composition as described herein, extrusion cast films were prepared from the materials listed below.

### Materials Used

EAC-1: a dipolymer of ethylene, and methacrylic acid (19 weight %), MI = 300.
EAC-2: a terpolymer of ethylene, n-butyl acrylate (23.5 weight %) and methacrylic acid (9 weight %), MI = 60.
EAC-3: a terpolymer of ethylene, n-butyl acrylate (28 weight %) and acrylic acid (6.2 weight %), MI = 210.
F-1: an ethylene/methyl acrylate copolymer grafted with 1.8 weight % of maleic anhydride, available from DuPont as Fusabond 556.
F-2: a linear low density polyethylene grafted with 0.9 weight % of maleic anhydride, available from DuPont as Fusabond 525.
F-3: an ethylene/propylene/diene copolymer grafted with 0.9 weight % of maleic anhydride, available from DuPont as Fusabond 416.
F-4: an ethylene/ethyl maleic acid monoester copolymer (90.5 weight % ethylene and 9.5 weight % ethyl hydrogen maleate), MI 30 g/10 minutes.
ABA: A mixture containing 90 weight % of a mixture of arachidic acid and behenic acid with 6 weight % C₁₈ acids and 4 weight % other acids commercially available under the tradename Hystrene® 9022 from Chemtura.
PA-6: A nylon-6 polymer available from BASF as ULTRAMID® B4001.
PA-6/66: A nylon-6/66 polymer available from BASF as ULTRAMID® C33 01.
PA-66: A nylon-66 polymer available from DuPont as ZYTEL® 42A NC010.
EBAGMA: an autoclave-produced ethylene n-butyl acrylate glycidyl methacrylate terpolymer (66.75 wt% ethylene, 28 wt% n-butyl acrylate, 5.25 wt% glycidyl methacrylate) with MI of 12 g/10minute, melting range 50°C to 80°C.

Employing a Werner & Pfleiderer twin-screw extruder, a composition containing 80 weight % of EAC-1 and 20 weight % of ABA was nominally neutralized to 93-95 % with potassium hydroxide to provide Composition A, an organic acid modified ionomer composition.

Composition A was melt blended with various polyamides and dicarboxylate-containing compatibilizers as summarized in Table 1, according to the following general procedure. Using a 30-mm twin-screw extruder equipped with high mixing screws, the polyamide and compatibilizer were metered in from the rear feeder and Composition A was fed from the rear feeder, a separate feeder, or a side stuffer in the mid-section of the extruder. The processing conditions included a melt temperature of 270 to 320 °C and a screw speed of 300 to 500 rpm. For some examples, screw speeds of up to 1000 rpm could be used.

Examples 4-6 were prepared by blending Examples 1-3, respectively, with additional portions of Composition A and compatibilizers to provide the amounts listed (parts by weight).

**Table 1**

| Example | PA-6 | PA-6/66 | PA-66 | Composition A | F-1 | F-2 | F-3 |
|---|---|---|---|---|---|---|---|
| C1 | 100 | 0 | 0 | 0 | 0 | 0 | 0 |
| C2 | 0 | 100 | 0 | 0 | 0 | 0 | 0 |
| C3 | 0 | 0 | 0 | 100 | 0 | 0 | 0 |
| 1 | 65.4 | 0 | 0 | 28 | 6.5 | 0 | 0 |
| 2 | 65.4 | 0 | 0 | 28 | 0 | 6.5 | 0 |
| 3 | 65.4 | 0 | 0 | 28 | 0 | 0 | 6.5 |
| 4 | 54.5 | 0 | 0 | 36.4 | 9 | 0 | 0 |
| 5 | 54.5 | 0 | 0 | 36.4 | 0 | 9 | 0 |
| 6 | 54.5 | 0 | 0 | 36.4 | 0 | 0 | 9 |
| 7 | 70 | 0 | 0 | 30 | 10 | 0 | 0 |
| 8 | 60 | 0 | 0 | 40 | 10 | 0 | 0 |
| 9 | 80 | 0 | 0 | 20 | 10 | 0 | 0 |
| 10 | 0 | 70 | 0 | 30 | 5 | 0 | 0 |
| 11 | 0 | 70 | 0 | 30 | 10 | 0 | 0 |
| 12 | 0 | 60 | 0 | 40 | 10 | 0 | 0 |
| 13 | 0 | 80 | 0 | 20 | 10 | 0 | 0 |
| 14 | 0 | 0 | 80 | 20 | 10 | 0 | 0 |
| 15 | 0 | 0 | 70 | 30 | 10 | 0 | 0 |
| 16 | 0 | 0 | 60 | 40 | 10 | 0 | 0 |
| 25 | 0 | 70 | 0 | 30 | 0 | 0 | 0 |

After melt blending, the example compositions were formed into cast films or blown films according to standard general procedures for extrusion casting or melt blown films.

**Table 2**

| Example | Cast film thickness, mil | WVTR, g/m²-24 h | WVPV, mil-g/m²-24 h |
|---|---|---|---|
| C1 | 1 | 547 | 547 |
| C2 | 1.85 | 374 | 691 |
| C3 | 2.2 | 5889 | 13013 |
| 1 | 1 | 985 | 985 |
| 2 | 1 | 923 | 923 |
| 3 | 1.1 | 761 | 837 |
| 4 | 1.2 | 822 | 986 |
| 5 | 1 | 1042 | 1042 |
| 6 | 1 | 1030 | 1030 |
| 7 | 2.4 | 417 | 1008 |
| 8 | NA | NA | NA |
| 9 | 2.5 | 409 | 1039 |
| 10 | 1.57 | 628 | 988 |
| 11 | 1.34 | 701 | 942 |
| 12 | 2.5 | 628 | 1568 |
| 13 | 2.1 | 503 | 1053 |
| 14 | NA | NA | NA |
| 15 | NA | NA | NA |
| 16 | NA | NA | NA |
| 25 | NA | NA | NA |

Tensile properties of some of the films were measured according to ASTM D882 in both machine direction (MD) and transverse direction (TD) and the results summarized in Table 3.

**Table 3**

| | MD | | TD | |
|---|---|---|---|---|
| Example | Tensile strength, psi | Elongation at break, % | Tensile strength, psi | Elongation at break, % |
| C1 | 9280 | 350 | 10490 | 390 |
| C3 | 1600 | 290 | 1100 | 149 |
| 1 | 6080 | 300 | 1850 | 170 |
| 2 | 7480 | 380 | 3540 | 260 |
| 3 | 7070 | 370 | 2970 | 240 |
| 4 | 4650 | 290 | 3190 | 230 |
| 5 | 5280 | 360 | 2020 | 200 |
| 6 | 6770 | 440 | 3360 | 300 |

Additional examples were prepared by blending Composition A, polyamide and ethylene acid terpolymers, as summarized in Table 4 (the value is "parts by weight"). The compositions were also formed into cast films and their permeablility to water vapor was determined, with the results summarized in Table 5.

**Table 4**

| Example | PA-6PA-6/66Composition AEAC-2EAC-3 |
|---|---|
| C2A | 0100000 |
| 17 | 0703005 |
| 18 | 07030015 |
| 19 | 0703050 |
| 20 | 07030150 |
| 21 | 7003005 |
| 22 | 70030015 |
| 23 | 7003050 |
| 24 | 70030150 |

**Table 5**

| Example | Cast film thickness, mil | WVTR g/m²-24 h | WVPV mil-g/m²-24 h |
|---|---|---|---|
| C2A | 1.6 | 465 | 752 |
| 17 | 3.0 | 448 | 1322 |
| 18 (core) | 3.3 | 466 | 1549 |
| 18 (end) | 5.3 | 345 | 1844 |
| 19 | NA | NA | NA |
| 20 | 14 | 114 | 1612 |
| 21 | NA | NA | NA |
| 22 | NA | NA | NA |
| 23 | NA | NA | NA |
| 24 | NA | NA | NA |

Additional examples were prepared by blending Composition A, polyamide and compatiblizer, as summarized in Table 6.

**Table 6**

| Example | PA-6 | Composition A | F-1 | F-2 | F-3 | EBAGMA |
|---|---|---|---|---|---|---|
| 26 | 65 | 30 | 5 | 0 | 0 | 0 |
| 27 | 65 | 30 | 0 | 5 | 0 | 0 |
| 28 | 65 | 30 | 0 | 0 | 5 | 0 |
| 29 | 65 | 30 | 0 | 0 | 0 | 5 |
| 30 | 50 | 45 | 5 | 0 | 0 | 0 |
| 31 | 50 | 45 | 0 | 5 | 0 | 0 |
| 32 | 50 | 45 | 0 | 0 | 5 | 0 |
| 33 | 50 | 45 | 0 | 0 | 0 | 5 |
| 34 | 69 | 30 | 0 | 0 | 0 | 1 |
| 35 | 59 | 40 | 0 | 0 | 0 | 1 |
| 36 | 55 | 45 | 0 | 0 | 0 | 0 |

## Claims

1. A composition comprising a blend of polyamide, an organic acid modified ionomer, and, optionally, a compatibilizer wherein
the organic acid modified ionomer comprises a blend of (a) one or more ethylene acid copolymers or E/W copolymers; E represents copolymerized units of ethylene, W represents copolymerized units of at least one C₃-C₈ α,β-ethylenically unsaturated carboxylic acid and (b) one or more organic acids, or salt thereof;
the organic acid has from 4 to 36 carbon atoms, optionally substituted on the longest carbon chain with one to three substituents independently selected from the group consisting of C₁-C₈ alkyl group, OH group, and OR¹ group;
each R¹ is independently C₁-C₈ alkyl group, C₁-C₆ alkoxyalkyl group, or COR² group;
each R² is independently C₁-C₈ alkyl group;
the organic acid or salt thereof is present in the composition from about 5 to about 50 weight % of the combination of (a) and (b);
at least 50 % of the combined acidic groups in the E/W copolymer and the organic acid are nominally neutralized to the corresponding salts containing metal ions wherein at least 50 % of the metal ions are alkali metal ions; and
the compatibilizer is selected from the group consisting of a dicarboxylate-containing copolymer, an ethylene acid copolymer, and an ethylene epoxide-containing ester copolymer;
the ethylene acid copolymer comprises copolymerized units of ethylene, copolymerized units of at least one C₃ to Cg α,β-ethylenically unsaturated carboxylic acid, and copolymerized units of vinyl acetate, alkyl acrylate, or alkyl methacrylate;
the ethylene epoxide-containing ester copolymer comprises copolymerized units of ethylene, copolymerized units of one or more olefins of the formula CH₂=C(R⁵)CO₂R⁶, and 0 to about 70% of copolymerized units of one or more olefins of the formula CH₂=C(R³)CO₂R⁴;
R³ is hydrogen or an alkyl group with 1 to 8 carbon atoms;
R⁴ is an alkyl group with 1 to 8 carbon atoms;
R⁵ is hydrogen or an alkyl group with 1 to 6 carbon atoms; and
R⁶ is glycidyl, based on the total weight of the ethylene ester copolymer.

2. The composition of claim 1 wherein, based on the total weight of the composition, the blend comprises
(1) 25 to 85 weight % of polyamide, 25 to 45 weight % of the organic acid modified ionomer, 0 to 15 weight % of the dicarboxylate-containing polymer, 0 to 20 weight % of the ethylene acid terpolymer, and 0 to 15 weight % of ethylene glycidyl ester copolymer; or
(2) 25 to 45 weight % of polyamide, 25 to 85 weight % of the organic acid modified ionomer, 0 to 15 weight % of the dicarboxylate-containing polymer, 0 to 20 weight % of the ethylene acid terpolymer, and 0 to 15 weight % of ethylene glycidyl ester copolymer and the polyamide is an aliphatic polyamide, amorphous polyamide, or partially aromatic polyamide.

3. The composition of claim 1 or 2 wherein the polyamide is selected from the group consisting of nylon-6, nylon-11, nylon-12, and nylon-6,12, nylon-66, nylon-610, nylon-612, nylon-1010, and nylon-1212), nylon-66/610, nylon 6/66, nylon 6/69, nylon MXDA, nylon 6-I/6-T, or combinations of two or more thereof.

4. The composition of claim 1 or 2 wherein the polyamide is nylon-6 homopolymer or copolymer, nylon 66, nylon 612, nylon 6/66, nylon 6/12, nylon 6/69, or nylon MXDA and is preferably nylon-6, nylon-6/66, nylon-66, or mixtures of nylon-6/66 and nylon-6.

5. The composition of any one of claims 1 to 4 wherein the organic acid has from 12 to 36 carbon atoms and is selected from the group consisting of caproic, caprylic, capric, lauric, myristic, palmitic, stearic, isostearic, 12-hydroxystearic, oleic, iso-oleic, linoleic, erucic, arachidic, behenic acid, and combinations of two or more thereof; and the metal ion is potassium ion.

6. The composition of claim any one of claims 1 to 5 comprising 0.1 to 15 % of the dicarboxylate-containing copolymer.

7. The composition of any one of claims 1 to 5 comprising 0.1 to 15 weight % of the ethylene epoxide-containing ester copolymer or 0.1 to 20 % of the ethylene acid copolymer.

8. An film comprising or produced from a first layer comprising a composition as recited in any one of claims 1 to 9 wherein the film has a moisture vapor transmission rate (MVTR) of at least about 300 or 750 g/m²-day, measured according to ASTM D6701-01, at 37.8°C at 100% relative humidity.

9. The film of claim 8 the MVTR is at least about 1000 and the film is biaxially oriented.

10. The film of claim 8 or 9 wherein the film is a multilayer film further comprising a second layer comprising a polyamide composition other than the composition of claim 1; the first layer is an inner layer; and the second layer is a first surface layer.

11. The film of claim 10 further comprising a second surface layer comprising a second composition, which comprises, based on the total weight of second composition, 45 to 85% of polyamide, 25 to 45% of the organic acid modified ionomer composition, 0 to 15% of dicarboxylate-containing polymer, 0 to 20% of ethylene acid terpolymer, and 0 to 15% of ethylene glycidyl ester copolymer.

12. The film of claim 11 wherein the inner layer further comprises a second organic acid modified ionomer composition other than the organic acid modified ionomer composition.

13. The film of claim 11 comprising two surface layers and an inner layer wherein
the surface layer comprises a composition comprising, based on the total weight of composition, 45 to 85% of polyamide, 25 to 45% of the organic acid modified ionomer composition, 0 to 15% of dicarboxylate-containing polymer, 0 to 20% of ethylene acid terpolymer, 0 to 15% of ethylene glycidyl ester copolymer; and
the inner layer comprises a composition comprising, based on the total weight of composition, 25 to 45% of polyamide, 45 to 85% of the organic acid modified ionomer composition, 0 to 15% of dicarboxylate-containing polymer, 0 to 20% of ethylene acid terpolymer, and 0 to 15% of ethylene glycidyl ester copolymer.

14. A package comprising or produced from a film **characterized in** any one of claims 8 to 13 wherein the package is optionally a tubular sausage casing.

15. Use of a film for packaging a foodstuff wherein the film is **characterized in** any one of claims 8 to 13; the foodstuff is optionally treated with smoke and heat and the foodstuff is a cooked meat sausage, scalded-emulsion meat product, cooked or rapidly fermented sausage containing fat, or smoked meat product.

## Patentansprüche

1. Zusammensetzung umfassend eine Mischung von Polyamid, einem durch organische Säure modifizierten Ionomer und wahlweise einem Kompatibilisiermittel, wobei
das durch organische Säure modifizierte Ionomer eine Mischung von (a) einem oder mehreren Ethylensäurecopolymeren oder E/W-Copolymeren umfasst, wobei E copolymerisierte Einheiten von Ethylen darstellt, W copolymerisierte Einheiten von mindestens einer a,ß-ethylenisch ungesättigten C₃-C₈-Carbonsäure und (b) eine oder mehrere organische Säuren oder Salze davon darstellt;
die organische Säure 4 bis 36 Kohlenstoffatome aufweist, die wahlweise an der längsten Kohlenstoffkette durch einen bis drei Substituenten substituiert sind, die unabhängig ausgewählt sind aus der Gruppe bestehend aus einer C₁ -C₈-Alkylgruppe, OH-Gruppe oder OR¹-Gruppe;
jedes R¹ unabhängig eine C₁-C₈-Alklygruppe, C₁-C₆-Alkoxyalkylgruppe oder COR²-Gruppe ist;
jedes R² unabhängig eine C₁-C₈-Alkylgruppe ist;
die organische Säure oder das Salz davon in der Zusammensetzung in einer Menge von etwa 5 bis etwa 50 Gew.-% der Kombination von (a) und (b) vorliegt;
mindestens 50 % der kombinierten sauren Gruppen im E/W-Copolymer und der organischen Säure nominell zu den entsprechenden Salzen neutralisiert sind, die Metallionen enthalten, wobei mindestens 50 % der Metallionen Alkalimetallionen sind; und
das Kompatibilisiermittel aus der Gruppe ausgewählt ist bestehend aus Dicarboxylat enthaltendem Copolymer, einem Ethylensäurecopolymer und einem Ethylenepoxid enthaltenden Estercopolymer;
das Ethylensäurecopolymer copolymerisierte Einheiten von Ethylen, copolymerisierte Einheiten von mindestens einer a,ß-ethylenisch ungesättigten C₃-C₈-Carbonsäure und copolymerisierten Einheiten von Vinylacetat, Alkylacrylat oder Alkylmethacrylat umfasst;
das Ethylenepoxid enthaltende Estercopolymer copolymerisierte Einheiten von Ethylen, copolymerisierte Einheiten eines oder mehrerer Olefine der Formel CH₂=C(R⁵)CO₂R⁶ und 0 bis etwa 70 % copolymerisierte Einheiten eines oder mehrerer Olefine der Formel CH₂=C(R⁵)CO₂R⁴ umfasst;
R³ Wasserstoff oder eine Alkylgruppe mit 1 bis 8 Kohlenstoffatomen ist;
R⁴ eine Alkylgruppe mit 1 bis 8 Kohlenstoffatomen ist;
R⁵ Wasserstoff oder eine Alkylgruppe mit 1 bis 6 Kohlenstoffatomen ist; und
R⁶ Glycidyl auf der Basis des Gesamtgewichts des Ethylen Estercopolymers ist.

2. Zusammensetzung nach Anspruch 1, wobei, auf der Basis des Gesamtgewichts der Zusammensetzung, die Mischung folgendes umfasst
(1) 25 bis 85 Gew.-% Polyamid, 25 bis 45 Gew.-% des durch organische Säure modifizierten Ionomers, 0 bis 15 Gew.-% des Dicarboxylat enthaltenden Polymers, 0 bis 20 Gew.-% Ethylensäureterpolymer und 0 bis 15 Gew.-% Ethylenglycidylestercopolymer; oder
(2) 25 bis 45 Gew.-% Polyamid, 25 bis 85 Gew.-% des durch organische Säure modifizierten Ionomers, 0 bis 15 Gew.-% des Dicarboxylat enthaltenden Polymers, 0 bis 20 Gew.-% des Ethylensäureterpolymers und 0 bis 15 Gew.-% Ethylenglycidylestercopolymer und wobei das Polyamid ein aliphatisches Polyamid, amorphes Polyamid oder teilweise aromatisches Polyamid ist.

3. Zusammensetzung nach Anspruch 1 oder 2, wobei das Polyamid aus der Gruppe ausgewählt ist bestehend aus Nylon-6, Nylon-11, Nylon-12 und Nylon-6,12, Nylon-66, Nylon-610, Nylon-612, Nylon-1010 und Nylon-1212, Nylon-66/610, Nylon 6/66, Nylon 6/69, Nylon MXDA, Nylon 6-I/6-T oder Kombinationen von zwei oder mehreren davon.

4. Zusammensetzung nach Anspruch 1 oder 2, wobei das Polyamid ein Nylon-6-Homopolymer oder -Copolymer, Nylon 66, Nylon 612, Nylon 6/66, Nylon 6/12, Nylon 6/69 oder Nylon MXDA ist und bevorzugt Nylon-6, Nylon-6/66, Nylon-66 oder Mischungen von Nylon-6/66 und Nylon-6 ist.

5. Zusammensetzung nach irgendeinem der Ansprüche 1 bis 4, wobei die organische Säure 12 bis 36 Kohlenstoffatome aufweist und aus der Gruppe ausgewählt ist bestehend aus Capron-, Capryl-, Caprin-, Laurin-, Myristin-, Palmitin-, Stearin-, Isostearin-, 12-Hydroxystearin- Olein-, Isoolein-, Linol-, Eruca-, Arachin-, Behensäure und Kombinationen von zwei oder mehreren davon; und das Metallion Kaliumion ist.

6. Zusammensetzung nach irgendeinem der Ansprüche 1 bis 5, umfassend 0,1 bis 15 % des Dicarboxylat enthaltenden Copolymers.

7. Zusammensetzung nach irgendeinem der Ansprüche 1 bis 5, umfassend 0,1 bis 15 Gew.-% des Ethylenepoxid enthaltenden Estercopolymers oder 0,1 bis 20 % des Ethylensäurecopolymers.

8. Folie, die eine erste Schicht umfasst oder daraus hergestellt ist, umfassend eine Zusammensetzung nach irgendeinem der Ansprüche 1 bis 9, wobei die Folie eine Feuchtigkeitsdampfdurchlässigkeitsrate (MVTR) von mindestens etwa 300 oder 750 g/m²-Tag, ASTM D 6701-01 entsprechend gemessen, bei 37,8 °C und einer relativen Feuchte von 100 % aufweist.

9. Folie nach Anspruch 8, wobei die MVTR mindestens etwa 1000 beträgt und die Folie biaxial orientiert ist.

10. Folie nach Anspruch 8 oder 9, wobei die Folie eine Mehrschichtfolie ist, die ferner eine zweite Schicht umfasst, die eine Polyamidzusammensetzung umfasst, bei der es sich nicht um die Zusammensetzung nach Anspruch 1 handelt; die erste Schicht eine Innenschicht ist; und die zweite Schicht eine erste Oberflächenschicht ist.

11. Folie nach Anspruch 10, ferner eine zweite Oberflächenschicht umfassend, die eine zweite Zusammensetzung umfasst, die, auf das Gesamtgewicht der zweiten Zusammensetzung bezogen, 45 bis 85 Gew.-% Polyamid, 25 bis 45 Gew.-% der durch organische Säure modifizierten Ionomerzusammensetzung, 0 bis 15 Gew.-% des Dicarboxylat enthaltenden Polymers, 0 bis 20 Gew.-% des Ethylensäureterpolymers und 0 bis 15 Gew.-% Ethylenglycidylestercopolymers umfasst.

12. Folie nach Anspruch 11, wobei die Innenschicht ferner eine zweite durch organische Säure modifizierte Ionomerzusammensetzung, bei der es sich nicht um die durch organische Säure modifizierte Ionomerzusammensetzung handelt, umfasst.

13. Folie nach Anspruch 11, umfassend zwei Oberflächenschichten und eine Innenschicht, wobei
die Oberflächenschicht eine Zusammensetzung umfasst, die auf das Gesamtgewicht der Zusammensetzung bezogen, 45 bis 85 Gew.-% Polyamid, 25 bis 45 Gew.-% der durch organische Säure modifizierten Ionomerzusammensetzung, 0 bis 15 Gew.-% des Dicarboxylat enthaltenden Polymers, 0 bis 20 Gew.-% Ethylensäureterpolymer und 0 bis 15 Gew.-% Ethylenglycidylestercopolymer umfasst; und
die Innenschicht eine Zusammensetzung umfasst, die auf das Gesamtgewicht der Zusammensetzung bezogen, 25 bis 45 Gew.-% Polyamid, 45 bis 85 Gew.-% der durch organische Säure modifizierten Ionomerzusammensetzung, 0 bis 15 Gew.-% Dicarboxylat enthaltendes Polymer, 0 bis 20 Gew.-% Ethylensäureterpolymer und 0 bis 15 Gew.-% Ethylenglycidylestercopolymer umfasst.

14. Verpackung umfassend oder hergestellt aus einer Folie, die durch einen der Ansprüche 8 bis 13 gekennzeichnet ist, wobei die Verpackung wahlweise eine röhrenförmige Wursthülle ist.

15. Verwendung einer Folie für das Verpacken eines Lebensmittels, wobei die Folie durch irgendeinen der Ansprüche 8 bis 13 gekennzeichnet ist; das Lebensmittel wahlweise mit Rauch und Hitze behandelt ist und das Lebensmittel eine gekochte Fleischwurst, ein Brühemulsionsfleischprodukt, eine gekochte oder schnell fermentierte Wurst, die Fett enthält, oder ein geräuchertes Fleischprodukt ist.

## Revendications

1. Composition comprenant un mélange de polyamide, d'un ionomère modifié avec un acide organique, et, éventuellement, d'un agent de mise en compatibilité,
l'ionomère modifié avec un acide organique comprenant un mélange de (a) un ou plusieurs copolymères d'acide d'éthylène ou copolymères d'E/W; E représente des motifs copolymérisés d'éthylène, W représente des motifs copolymérisés d'au moins un acide carboxylique en C₃ à C₈ α,β-éthyléniquement insaturé et (b) un ou plusieurs acides organiques, ou leur sel;
l'acide organique possède de 4 à 36 atomes de carbone, éventuellement substitués sur la chaîne de carbone la plus longue par un à trois substituants indépendamment sélectionnés dans le groupe constitué du groupe alkyle en C₁ à C₈, groupe OH, et groupe OR¹;
chaque R¹ est indépendamment un groupe alkyle en C₁ à C₈, un groupe alcoxyalkyle en C₁ à C₆, ou un groupe COR²;
chaque R² est indépendamment un groupe alkyle en C₁ à C₈;
l'acide organique ou son sel est présent dans la composition d'environ 5 à environ 50 % en poids de la combinaison de (a) et (b);
au moins 50 % des groupes acides combinés dans le copolymère d'E/W et l'acide organique sont essentiellement neutralisés en les sels correspondants contenant des ions métalliques, au moins 50 % des ions métalliques étant des ions de métal alcalin; et
l'agent de mise en compatibilité est sélectionné dans le groupe constitué d'un copolymère contenant un dicarboxylate, d'un copolymère d'acide d'éthylène, et d'un copolymère d'ester contenant de l'époxyde d'éthylène;
le copolymère d'acide d'éthylène comprend des motifs copolymérisés d'éthylène, des motifs copolymérisés d'au moins un acide carboxylique en C₃ à C₈ α,β-éthyléniquement insaturé, et des motifs copolymérisés d'acétate de vinyle, d'acrylate d'alkyle, ou de méthacrylate d'alkyle;
le copolymère d'ester contenant l'époxyde d'éthylène comprend des motifs copolymérisés d'éthylène, des motifs copolymérisés d'une ou plusieurs oléfines de la formule CH₂=C(R⁵)CO₂R⁶, et de 0 à environ 70 % de motifs copolymérisés d'une ou plusieurs oléfines de la formule CH₂=C(R³)CO₂R⁴;
R³ est un atome d'hydrogène ou un groupe alkyle ayant de 1 à 8 atomes de carbone;
R⁴ est un groupe alkyle ayant de 1 à 8 atomes de carbone;
R⁵ est un atome d'hydrogène ou un groupe alkyle ayant de 1 à 6 atomes de carbone; et
R⁶ est un groupe glycidyle, sur la base du poids total du copolymère d'ester d'éthylène.

2. Composition selon la revendication 1, sur la base du poids total de la composition, le mélange comprenant
(1) de 25 à 85 % en poids de polyamide, de 25 à 45 % en poids de l'ionomère modifié avec un acide organique, de 0 à 15 % en poids de polymère contenant un groupe dicarboxylate, de 0 à 20 % en poids de terpolymère d'acide d'éthylène, et de 0 à 15 % en poids de copolymère d'ester glycidylique d'éthylène; ou
(2) de 25 à 45 % en poids de polyamide, de 25 à 85 % en poids de l'ionomère modifié avec un acide organique, de 0 à 15 % en poids de polymère contenant un groupe dicarboxylate, de 0 à 20 % en poids de terpolymère d'acide d'éthylène, et de 0 à 15 % en poids de copolymère d'ester glycidylique d'éthylène et le polyamide est un polyamide aliphatique, un polyamide amorphe, ou un polyamide partiellement aromatique.

3. Composition selon la revendication 1 ou 2, le polyamide étant sélectionné dans le groupe constitué du nylon-6, nylon-11, nylon-12, et nylon-6,12, nylon-66, nylon-610, nylon-612, nylon-1010, et nylon-1212, nylon-66/610, nylon-6/66, nylon-6/69, nylon MXDA, nylon 6-I/6-T, ou des combinaisons deux ou plusieurs d'entre eux.

4. Composition selon la revendication 1 ou 2, le polyamide étant l'homopolymère ou le copolymère de nylon-6, le nylon-66, nylon-612, nylon-6/66, nylon-6/12, nylon-6/69, ou nylon MXDA et est préférablement le nylon-6, nylon-6/66, nylon-66, ou des mélanges de nylon-6/66 et de nylon-6.

5. Composition selon l'une quelconque des revendications 1 à 4, l'acide organique ayant de 12 à 36 atomes de carbone et étant sélectionné dans le groupe constitué de l'acide caproïque, caprylique, caprique, laurique, myristique, palmitique, stéarique, isostéarique, 12-hydroxystéarique, oléique, iso-oléique, linoléique, érucique, arachidique, béhénique, et des combinaisons de deux ou plusieurs d'entre eux; et l'ion métallique étant l'ion potassium.

6. Composition selon l'une quelconque des revendications 1 à 5 comprenant de 0,1 à 15 % de copolymère contenant un groupe dicarboxylate.

7. Composition selon l'une quelconque des revendications 1 à 5 comprenant de 0,1 à 15 % en poids de copolymère d'ester contenant de l'époxyde d'éthylène ou de 0,1 à 20 % de copolymère d'acide d'éthylène.

8. Film comprenant ou produit à partir d'une première couche comprenant une composition telle qu'énoncée selon l'une quelconque des revendications 1 à 9, le film ayant un taux de transmission de la vapeur humide (MVTR) d'au moins environ 300 ou 750 g/m²/jour, mesuré selon la norme ASTM D6701-01, à 37,8°C à 100 % d'humidité relative.

9. Film selon la revendication 8, le MVTR étant au moins d'environ 1 000 et le film étant orienté de manière biaxiale.

10. Film selon la revendication 8 ou 9, le film étant un film multicouche comprenant en outre une seconde couche comprenant une composition de polyamide autre que la composition selon la revendication 1; la première couche étant une couche interne; et la seconde couche étant une première couche de surface.

11. Film selon la revendication 10 comprenant en outre une seconde couche de surface comprenant une seconde composition, qui comprend, sur la base du poids total de la seconde composition, de 45 à 85 % de polyamide, de 25 à 45 % de la composition d'ionomère modifié avec un acide organique, de 0 à 15 % de polymère contenant un groupe dicarboxylate, de 0 à 20 % de terpolymère d'acide d'éthylène, et de 0 à 15 % de copolymère d'ester glycidylique d'éthylène.

12. Film selon la revendication 11, la couche interne comprenant en outre une seconde composition d'ionomère modifié avec un acide organique autre que la composition d'ionomère modifié avec un acide organique.

13. Film selon la revendication 11 comprenant deux couches de surface et une couche interne,
la couche de surface comprenant une composition comprenant, sur la base du poids total de la composition, de 45 à 85 % de polyamide, de 25 à 45 % de la composition d'ionomère modifié avec un acide organique, de 0 à 15 % de polymère contenant un groupe dicarboxylate, de 0 à 20 % de terpolymère d'acide d'éthylène, de 0 à 15 % de copolymère d'ester glycidylique d'éthylène; et
la couche interne comprenant une composition comprenant, sur la base du poids total de la composition, de 25 à 45 % de polyamide, de 45 à 85 % de la composition d'ionomère modifié avec un acide organique, de 0 à 15 % de polymère contenant un groupe dicarboxylate, de 0 à 20 % de terpolymère d'acide d'éthylène, et de 0 à 15 % de copolymère d'ester glycidylique d'éthylène.

14. Emballage comprenant ou produit à partir d'un film caractérisé selon l'une quelconque des revendications 8 à 13, l'emballage étant éventuellement un boyau tubulaire pour saucisse.

15. Utilisation d'un film destiné à l'emballage d'un produit alimentaire, le film étant caractérisé selon l'une quelconque des revendications 8 à 13; le produit alimentaire étant éventuellement traité avec de la fumée et de la chaleur et le produit alimentaire étant une saucisse de viande cuite, un produit carné en émulsion ébouillantée, une saucisse cuite ou rapidement fermentée contenant de la matière grasse, ou un produit carné fumé.
